# EUROPEAN PATENT APPLICATION

(11) **EP 3 735 086 A1**
(43) Date of publication of application: **04.11.2020**
(21) Application number: 20169740.6
(22) Date of filing: 16.04.2020
(51) Int. Cl.: H04W 72/12

(54) **BUFFER STATUS REPORT FOR SIDELINK RESOURCE ALLOCATION**

(30) Priority: 02.05.2019 US 201962842270 P
(71) Applicant: Nokia Technologies Oy, 02610 Espoo (FI)
(72) Inventor: YU, Ling, 02700 Kauniainen (FI); VAN PHAN, Vinh, 90100 Oulu (FI); STANCZAK, Jedrzej, 54107 Wroclaw (PL); WILDSCHEK, Torsten, Gloucester, GL4 5TW (GB)
(74) Representative: Nokia EPO representatives

(57) **Abstract**

Systems, methods, apparatuses, and computer program products for NR sidelink (SL) buffer status reporting are provided. One method may include configuring, to one or more UE(s), at least one SL BSR format to include different information to be reported for requesting SL resource allocation. For example, the different information may include one or more of buffer size, the amount of resources, the desired MCS, the CSI, etc.

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for NR sidelink (SL) buffer status reporting.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR provides bitrates on the order of 10-20 Gbit/s or higher, and can support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

### BRIEF DESCRIPTION OF THE DRAWINGS:

For proper understanding of example embodiments, reference should be made to the accompanying drawings, wherein:
Fig. 1a illustrates an example flow diagram of a method, according to one embodiment;
Fig. 1b illustrates another example flow diagram of a method, according to one embodiment;
Fig. 2a illustrates an example block diagram of an apparatus, according to one embodiment; and
Fig. 2b illustrates another example block diagram of an apparatus, according to one embodiment.

### SUMMARY

In a first aspect thereof the exemplary embodiments of this invention provide an apparatus that comprises means for transmitting a configuration, to a user equipment, of at least one supported sidelink buffer status report format to include different information to be reported for requesting sidelink resource allocation; and means for receiving, from the user equipment, a sidelink buffer status report based on the at least one supported sidelink buffer status report format configured for the user equipment.

In a further aspect thereof the exemplary embodiments of this invention provide a method that comprises receiving a configuration, by a user equipment from a network node, of at least one supported sidelink buffer status report format to include different information to be reported for requesting sidelink resource allocation; and transmitting, to the network node, a sidelink buffer status report based on the at least one supported sidelink buffer status report format configured for the user equipment.

In another aspect thereof the exemplary embodiments of this invention provide an apparatus that comprises means for receiving a configuration, from a network node, of at least one supported sidelink buffer status report format to include different information to be reported for requesting sidelink resource allocation; and means for transmitting, to the network node, a sidelink buffer status report based on the at least one supported sidelink buffer status report format configured for the apparatus.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for NR sidelink (SL) buffer status reporting, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain example embodiments, and not in limitation thereof.

Certain embodiments may relate to 3^{rd} generation partnership project (3GPP) NR sidelink (SL) in Release-16 and beyond. NR SL has been studied under a 3GPP NR V2X study item (SI) and aims to provide high-reliability and low-latency communication (HRLLC) in order to support advanced vehicle-to-everything (V2X) use cases. NR SL supports different casting types including unicast, groupcast and broadcast. A SL UE can operate in a resource allocation mode 1 that is network scheduled, or can operate in a resource allocation mode 2 that is UE autonomous. In the resource allocation mode 1, the UE reports its buffer status report (BSR) and sends a scheduling request (SR) in order to obtain a transmission grant from the network (NW).

Based on the NR V2X SI conclusion, the SL channel state information (CSI) acquisition for unicast is supported with NR SL. Channel quality indicator (CQI)/rank indicator (RI) reporting is supported, and the CQI and RI are reported together; however, no pre-coding matrix indicator (PMI) reporting is supported. Multi-rank physical sidelink shared channel (PSSCH) transmission is supported up to two antenna ports.

In SL, CSI may be delivered using PSSCH (including PSSCH containing CSI only) using the resource allocation procedure for data transmission. However, the CSI acquisition is only supported over the SL between UEs. Therefore, the SL CSI report from a UE to gNB was not considered in the current design of NR SL for, e.g., mode 1 resource allocation.

To facilitate NR SL mode 1 resource allocation, it has been agreed that, for SL BSR, at least buffer size, destination index and logical channel group (LCG) ID should be adopted. After a gNB receives SL BSR from UEs to request mode 1 resource allocation for SL transmission, the gNB is actually not able to determine the optimal amount of the resources that the requesting UE needs for SL transmission if only buffer size is indicated in the SL BSR. This is because the gNB is not aware of the SL CSI and therefore is not able to determine the optimal modulation and coding scheme (MCS), etc. So the buffer size triggered mode 1 resource allocation for SL communication is not seen as an optimal solution, especially considering that the SL CSI acquisition is possible and supported over the SL, e.g., in unicast case.

In LTE SL design, the SL BSR contains the indication about the buffer size. At least the same SL BSR content has been agreed to be included for NR SL mode 1. This is acceptable for LTE SL design as LTE SL is broadcast-based without physical layer feedback. So the SL CSI is not known either by SL transmission (Tx) and reception (Rx) UE or eNB. The buffer size is sufficient information for the eNB to determine the mode 1 (equivalent of Mode 3 in LTE) resource allocation without knowing the CSI of SL. However, the same approach for NR SL is insufficient.

Therefore, certain embodiments provide a configurable SL BSR format to include different information to be reported for requesting SL mode 1 resource allocation from a base station (BS). For example, in some embodiments, the different information may include one or more of buffer size, the amount of resources, the desired MCS, the CSI, etc.

In one embodiment, a BS may configure the supported SL BSR formats to the UEs that request the SL mode 1 resource allocation for SL communication. According to certain embodiments, the supported SL BSR formats may include at least one of: (i) only report buffer size, (ii) only report the amount of the resources, (iii) either report buffer size or amount of the resources, (iv) report both buffer size plus amount of the resources, (v) report buffer size plus desired MCS, or (vi) report buffer size plus CSI .

In some examples, the configuration of the SL BSR report format from BS may be different for different SL cast type. For instance, the SL BSR for SL broadcast and groupcast may be configured to have only one BSR format to include the buffer size. For SL unicast, either SL BSR format of including buffer size or amount of resources or buffer size and amount of resource/desired MCS/CSI may be configured.

According to some embodiments, the configuration of the supported SL BSR formats may be done either using dedicated signaling to configure the individual UEs for SL BSR or using broadcasted common signaling to configure the relevant UEs within the cell. In an embodiment, the configuration may be associated with the other information, such as cast type, SL carriers, V2X services (e.g., in the form of destination ID), QoS attributes (e.g., in the form of LCG), etc. In certain embodiments, the configuration may also include the rules for the UE to determine which SL BSR format to be used if either format is configured.

In one embodiment, the UE may, based on the configuration from the base station, determine which SL BSR format to use for the report. For example, if the UE is configured with multiple SL BSR formats including either buffer size or amount of resources to request the mode 1 resource allocation, the UE may determine, based on the configured rules, whether buffer size or amount of resources should be included in the SL BSR. For instance, if SL CSI is available in the UE that sends SL BSR, the UE may determine the amount of the resources for the SL transmission by taking into account the buffer size and the SL CSI. Thus, the UE may determine to include the amount of the resources in the SL BSR instead of buffer size.

In other words, according to an embodiment, a UE, based on whether SL CSI is available or not, may determine which SL BSR format to use. In this case, the different SL BSR format indication may be defined in the SL BSR to allow the UE and NW to differentiate the SL BSR format to be used. In certain embodiments, the amount of the resources determined by the UE may also take into account other configured information from the BS, such as SL carriers, the V2X services, and/or corresponding QoS, etc.

According to some embodiments, the amount of resources or desired MCS or CSI may be reported, in addition to buffer size, to the BS and may be used by the BS to verify that the required resources are reasonable for buffered data transmission over SL. Using desired MCS instead of amount of resources might allow more compact signalling without loss of resolution in SL BSR. If CSI is reported together with buffer size, it may allow more optimal scheduling by the BS. For example, if the SL transmission for which the resources are requested does not have a tight latency requirement then the BS may decide to schedule at less robust MCS (hence fewer resources) with a higher number of expected retransmission (and resources for at least some of the retransmissions could be indicated in the same DCI scheduling the initial Tx). As another example, if the SL transmission for which the resources are requested does have a tight latency requirement and there are ample resources available, then the BS may decide to schedule at more robust MCS (hence more resources) to increase the probability that the initial Tx will be decoded successfully by the destination UE.

When a UE determines the amount of resources to be reported/requested in the SL BSR, a mode 2 resource allocation process may be used to decide how much resources should be used to transmit the buffered data. In an embodiment, the amount of the resources may be determined, for example, based on the buffer size and the selected MCS based on the SL CSI information and the QoS associated with the buffered data. In one example, the UE may use configured mode 2 resource pool as the reference to determine the amount of the resources and report to the base station in the SL BSR. Based on the configured mode 2 resource pool and reported amount of resources related to the configured mode 2 resource pool, the BS may be able to derive the optimal mode 1 resources to be allocated to the UE.

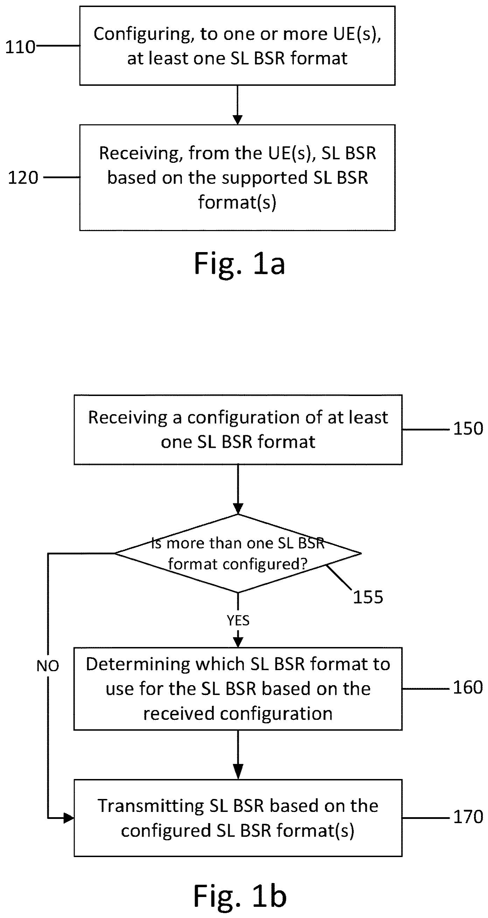

Fig. 1a illustrates one example flow diagram of a method for SL BSR reporting, according to an example embodiment. In certain example embodiments, the flow diagram of Fig. 1a may be performed by a network entity or network node in a 3GPP system, such as LTE or 5G NR. For instance, in some example embodiments, the method of Fig. 1a may be performed by a base station, eNB, or gNB, or other access node.

As illustrated in the example of Fig. 1a, the method may include, at 110, configuring, to one or more UE(s), at least one supported SL BSR format to include different information to be reported for requesting SL resource allocation. For example, the configuring 110 may include providing a configuration to UE(s) that request the SL mode 1 resource allocation for SL communication. In an embodiment, the different information to be reported may include one or more of buffer size, amount of resources, desired MCS and/or CSI.

According to certain embodiments, the configuring 110 may include configuring the supported SL BSR format(s) to the UE(s) that request SL mode 1 resource allocation for SL communication. In some embodiments, the supported SL BSR format(s) may include, for example, at least one of: reporting only buffer size, reporting only the amount of resources, reporting either buffer size or the amount of resources, or reporting both the buffer size and the amount of resources or buffer size and desired MCS or buffer size and CSI. According to an embodiment, the method may include using the amount of resources, desired MCS or CSI, in addition to the buffer size, to verify that the required resources are sufficient for buffered data transmission over SL.

In some embodiments, the configuring 110 may include using dedicated signaling to configure each of the UE(s) for SL BSR or using broadcast common signaling to configure the UE(s). According to an embodiment, the configuration of the supported SL BSR format(s) may be associated with other information including, for example, cast type, SL carriers, V2X services, and/or QoS attributes. In one embodiment, when more than one SL BSR is supported, the configuration of the SL BSR formats includes rules for the UE(s) to determine which SL BSR format to use.

According to certain embodiments, the configuration of the supported SL BSR format(s) may be different for different SL cast types. In one embodiment, the method may also include, at 120, receiving from the UE(s) SL BSR based on the supported SL BSR format(s) configured for the UE(s).

Fig. 1b illustrates an example flow diagram of a method for SL BSR reporting, according to one example embodiment. In certain example embodiments, the flow diagram of Fig. 1b may be performed by a UE, mobile equipment (ME), mobile station, mobile device, stationary device, IoT device, or other device.

As illustrated in the example of Fig. 1b, the method may include, at 150, receiving a configuration, from a network node, of at least one supported SL BSR format to include different information to be reported for requesting SL resource allocation. For example, the receiving 150 may include receiving the configuration at a UE that requests the SL mode 1 resource allocation for SL communication. In an embodiment, the different information to be reported may include one or more of buffer size, amount of resources, desired MCS and/or CSI.

In some embodiments, the supported SL BSR format(s) may include, for example, at least one of: reporting only buffer size, reporting only the amount of resources, reporting either buffer size or the amount of resources, or reporting both the buffer size and the amount of resources or buffer size and desired MCS or buffer size and CSI.

In some embodiments, the receiving 150 may include receiving the configuration over dedicated signaling or over broadcast common signaling. According to an embodiment, the configuration of the supported SL BSR format(s) may be associated with other information including, for example, cast type, SL carriers, V2X services, and/or QoS attributes. In one embodiment, when more than one SL BSR is supported, the receiving 150 may include receiving the configuration of the SL BSR formats including rules for the UE(s) to determine which SL BSR format to use.

In one embodiment, the method may also include, at 155, determining whether more than one SL BSR format is configured. According to an embodiment, when there is just one SL BSR format configured, then the method may proceed to step 170. In an embodiment, when there is more than one SL BSR format configured, then the method may include, at 160, determining which SL BSR format to use for the SL BSR based on the configuration received from the network. In an embodiment, the determining 160 may include, when the UE is configured with multiple SL BSR formats including either buffer size or amount of resources to request the mode 1 resource allocation, determining whether buffer size or amount of resources should be included in the SL BSR based on the configured rules. In one embodiment, the method may then include, at 170, transmitting, to the network, SL BSR based on the supported SL BSR format(s) configured for the UE(s).

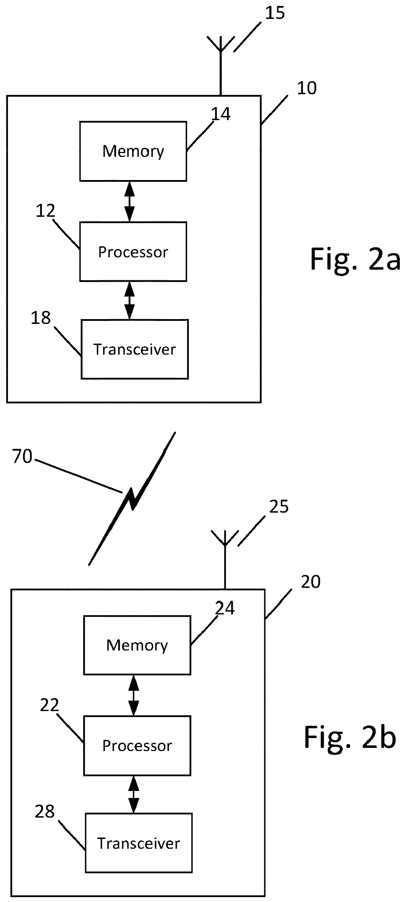

Fig. 2a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 2a.

As illustrated in the example of Fig. 2a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 2a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like. According to certain embodiments, apparatus 10 may be controlled by memory 14 and processor 12 to perform the functions associated with any of the embodiments described herein, such as the flow or signaling diagrams illustrated in Fig. 1a. In some embodiments, apparatus 10 may be configured to perform a procedure for facilitating SL BSR reporting, for example. In an embodiment, apparatus 10 may represent a network node, such as a gNB.

In an embodiment, apparatus 10 may be controlled by memory 14 and processor 12 to configure, to one or more UE(s), at least one SL BSR format to include different information to be reported for requesting SL resource allocation. For example, apparatus 10 may be controlled by memory 14 and processor 12 to provide a configuration to UE(s) that request the SL mode 1 resource allocation for SL communication. In an embodiment, the different information to be reported may include one or more of buffer size, amount of resources, desired MCS and/or CSI.

According to certain embodiments, apparatus 10 may be controlled by memory 14 and processor 12 to configure the supported SL BSR format(s) to the UE(s) that request SL mode 1 resource allocation for SL communication. In some embodiments, the supported SL BSR format(s) may include, for example, one or more of: reporting only buffer size, reporting only the amount of resources, reporting either buffer size or the amount of resources, or reporting both the buffer size and the amount of resources or desired MCS or CSI. According to an embodiment, apparatus 10 may be controlled by memory 14 and processor 12 to verify that the required resources are possible for buffered data transmission over SL using the amount of resources, desired MCS or CSI, in addition to the buffer size.

In some embodiments, apparatus 10 may be controlled by memory 14 and processor 12 to use dedicated signaling to configure each of the UE(s) for SL BSR or to use broadcast common signaling to configure the UE(s). According to an embodiment, the configuration of the supported SL BSR format(s) may be associated with other information including, for example, cast type, SL carriers, V2X services, and/or QoS attributes. In one embodiment, when more than one SL BSR is supported, the configuration of the SL BSR formats includes rules for the UE(s) to determine which SL BSR format to use.

According to certain embodiments, the configuration of the supported SL BSR format(s) may be different for different SL cast types. In one embodiment, apparatus 10 may be further controlled by memory 14 and processor 12 to receive from the UE(s) SL BSR based on the supported SL BSR format(s) configured for the UE(s).

Fig. 2b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 2b.

As illustrated in the example of Fig. 2b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 2b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Fig. 1b. In certain embodiments, apparatus 20 may include or represent a UE and may be configured to perform a procedure for SL BSR reporting, for instance.

According to one embodiment, apparatus 20 may be controlled by memory 24 and processor 22 to receive a configuration, from a network node, of at least one SL BSR format to include different information to be reported for requesting SL resource allocation. For example, apparatus 20 may be controlled by memory 24 and processor 22 to receive the configuration at apparatus 20, which requests the SL mode 1 resource allocation for SL communication. In an embodiment, the different information to be reported may include one or more of buffer size, amount of resources, desired MCS and/or CSI.

In some embodiments, the supported SL BSR format(s) may include, for example, at least one of: reporting only buffer size, reporting only the amount of resources, reporting either buffer size or the amount of resources, or reporting both the buffer size and the amount of resources or desired MCS or CSI.

In some embodiments, apparatus 20 may be controlled by memory 24 and processor 22 to receive the configuration over dedicated signaling or over broadcast common signaling. According to an embodiment, the configuration of the supported SL BSR format(s) may be associated with other information including, for example, cast type, SL carriers, V2X services, and/or QoS attributes. In one embodiment, when more than one SL BSR is supported, apparatus 20 may be controlled by memory 24 and processor 22 to receive the configuration of the SL BSR formats including rules for the apparatus 20 to determine which SL BSR format to use.

In one embodiment, apparatus 20 may be controlled by memory 24 and processor 22 to determine which SL BSR format to use for the BSR based on the configuration received from the network. In an embodiment, when the UE is configured with multiple SL BSR formats including either buffer size or amount of resources to request the mode 1 resource allocation, apparatus 20 may be controlled by memory 24 and processor 22 to determine whether buffer size or amount of resources should be included in the SL BSR based on the configured rules. In one embodiment, apparatus 20 may be controlled by memory 24 and processor 22 to transmit, to the network, SL BSR based on the supported SL BSR format(s) configured for the apparatus 20.

Therefore, certain example embodiments provide several technical improvements, enhancements, and/or advantages. For example, according to certain embodiments, a configurable SL BSR format can be provided. Certain embodiments can result in more compact signaling without loss of resolution in SL BSR, and can allow for more optimal scheduling by the network. Accordingly, the use of certain example embodiments results in improved functioning of communications networks and their nodes.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

One having ordinary skill in the art will readily understand that the example embodiments as discussed above may be practiced with steps in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the spirit and scope of example embodiments.

A first embodiment is directed to a method that may be performed by a network node. The method may include configuring, to one or more UE(s), at least one SL BSR format to include different information to be reported for requesting SL resource allocation. The method may also include receiving, from the UE(s), a SL BSR based on the supported SL BSR format(s) configured for the UE(s).

In a variant, the configuring may include providing a configuration to UE(s) that request the SL mode 1 resource allocation for SL communication. In a variant, the different information to be reported may include one or more of buffer size, amount of resources, desired MCS and/or CSI.

According to a variant, the supported SL BSR format(s) may include at least one of reporting only buffer size, reporting only the amount of resources, reporting either buffer size or the amount of resources, reporting both the buffer size and the amount of resources, reporting buffer size and desired MCS, or reporting buffer size and CSI. According to a variant, the method may include using the amount of resources, desired MCS or CSI, in addition to the buffer size, to verify that the required resources are sufficient for buffered data transmission over SL.

In a variant, the configuring may include using dedicated signaling to configure each of the UE(s) for SL BSR or using broadcast common signaling to configure the UE(s). According to a variant, the configuration of the supported SL BSR format(s) may be associated with other information including, for example, cast type, SL carriers, V2X services, and/or QoS attributes. In a variant, when more than one SL BSR is supported, the configuration of the SL BSR formats includes rules for the UE(s) to determine which SL BSR format to use. According to a variant, the configuration of the supported SL BSR format(s) may be different for different SL cast types.

A second embodiment is directed to a method that may be performed by a UE. The method may include receiving a configuration, from a network node, of at least one SL BSR format to include different information to be reported for requesting SL resource allocation. The method may also include transmitting, to the network node, a SL BSR based on the supported SL BSR format(s) configured for the UE.

In a variant, the receiving may include receiving the configuration at a UE that requests the SL mode 1 resource allocation for SL communication. In a variant, the different information to be reported may include one or more of buffer size, amount of resources, desired MCS and/or CSI.

According to a variant, the supported SL BSR format(s) may include at least one of reporting only buffer size, reporting only the amount of resources, reporting either buffer size or the amount of resources, and/or reporting both the buffer size and the amount of resources or buffer size and desired MCS or buffer size and CSI. In a variant, the receiving may include receiving the configuration over dedicated signaling or over broadcast common signaling.

According to a variant, the method may also include determining which SL BSR format to use for the BSR based on the configuration received from the network. In a variant, when more than one SL BSR is supported, the receiving may include receiving the configuration of the SL BSR formats including rules for the UE to determine which SL BSR format to use. In another variant, the determining may include, when the UE is configured with multiple SL BSR formats including either buffer size or amount of resources to request the mode 1 resource allocation, determining whether buffer size or amount of resources should be included in the SL BSR based on the configured rules.

A third embodiment is directed to an apparatus including at least one processor and at least one memory comprising computer program code. The at least one memory and computer program code may be configured, with the at least one processor, to cause the apparatus at least to perform the method according to the first embodiment or the second embodiment, or any of their variants.

A fourth embodiment is directed to an apparatus that may include circuitry configured to perform the method according to the first embodiment or the second embodiment, or any of their variants.

A fifth embodiment is directed to an apparatus that may include means for performing the method according to the first embodiment or the second embodiment, or any of their variants.

A sixth embodiment is directed to a computer readable medium comprising program instructions stored thereon for performing at least the method according to the first embodiment or the second embodiment, or any of their variants.

## Claims

1. An apparatus, comprising:
means for transmitting a configuration, to a user equipment, of at least one supported sidelink buffer status report format to include different information to be reported for requesting sidelink resource allocation; and
means for receiving, from the user equipment, a sidelink buffer status report based on the at least one supported sidelink buffer status report format configured for the user equipment.

2. The apparatus according to claim 1, wherein the configuration is provided to the user equipment that requests sidelink mode 1 resource allocation for sidelink communication.

3. The apparatus according to claim 1 or 2, wherein the different information to be reported comprises at least one of buffer size, amount of resources, desired modulation and coding scheme, and channel state information.

4. The apparatus according to any one of claims 1-3, wherein the at least one supported sidelink buffer status report format comprises at least one of reporting only buffer size, reporting only amount of resources, reporting either the buffer size or the amount of resources, reporting both the buffer size and the amount of resources, reporting the buffer size and desired modulation and coding scheme, and reporting the buffer size and channel state information.

5. The apparatus according to any one of claims 1-4, wherein the configuration is transmitted using dedicated signaling or using broadcast common signaling.

6. The apparatus according to any one of claims 1-5, wherein the configuration of the at least one supported sidelink buffer status report format comprises rules for the user equipment to determine which sidelink buffer status report format to use when more than one supported sidelink buffer status report format is configured.

7. A method, comprising:
receiving a configuration, by a user equipment from a network node, of at least one supported sidelink buffer status report format to include different information to be reported for requesting sidelink resource allocation; and
transmitting, to the network node, a sidelink buffer status report based on the at least one supported sidelink buffer status report format configured for the user equipment.

8. The method according to claim 7, wherein the different information to be reported comprises at least one of buffer size, amount of resources, desired modulation and coding scheme, and channel state information.

9. The method according to claim 7 or 8, wherein the configuration of the at least one supported sidelink buffer status report format further comprises rules for the user equipment to determine which sidelink buffer status report format to use.

10. An apparatus, comprising:
means for receiving a configuration, from a network node, of at least one supported sidelink buffer status report format to include different information to be reported for requesting sidelink resource allocation; and
means for transmitting, to the network node, a sidelink buffer status report based on the at least one supported sidelink buffer status report format configured for the apparatus.

11. The apparatus according to claim 10, wherein the configuration is received by the apparatus that requests sidelink mode 1 resource allocation for sidelink communication.

12. The apparatus according to claim 10 or 11, wherein the different information to be reported comprises at least one of buffer size, amount of resources, desired modulation and coding scheme, and channel state information.

13. The apparatus according to any one of claims 10-12, wherein the at least one supported sidelink buffer status report format comprises at least one of reporting only buffer size, reporting only amount of resources, reporting either the buffer size or the amount of resources, reporting both the buffer size and the amount of resources, reporting the buffer size and desired modulation and coding scheme, and reporting the buffer size and channel state information.

14. The apparatus according to any one of claims 10-13, wherein the configuration is received over dedicated signaling or over broadcast common signaling.

15. The apparatus according to any one of claims 10-14, wherein the configuration of the at least one supported sidelink buffer status report format further comprises rules for the apparatus to determine which sidelink buffer status report format to use.
